# EUROPÄISCHE PATENTANMELDUNG

(11) **EP 0 937 511 A1**
(43) Veröffentlichungstag der Anmeldung: **25.08.1999**
(21) Anmeldenummer: 98102803.8
(22) Anmeldetag: 18.02.1998
(51) Int. Cl.: B09B 3/00, B03B 9/06, B29B 17/02

(54) **Verfahren zur Überprüfung der Verarbeitung eines Ausgangsmaterials zu einem Zwischen- oder Endprodukt**

(71) Anmelder: Lindner, Wolfgang, Dr., 51145 Köln (DE)
(72) Erfinder: Lindner, Wolfgang, Dr., 51145 Köln (DE)
(74) Vertreter: Liesegang, Eva

(57) **Zusammenfassung**

Die Erfindung sieht ein Verfahren zur Überprüfung der Verarbeitung eines Ausgangsmaterials zu einem Zwischen- oder Endprodukt vor, bei dem einer oder mehrere der folgenden Eingangsparameter erfaßt werden: die Art und Menge des verwendeten Ausgangsmaterials, die Art und Menge von eingesetzten Zusatzstoffen, die verbrauchten Energie- und Wassermengen, der Einsatz menschlicher Arbeitskraft; einer oder mehrere der folgenden Ausgangsparameter erfaßt werden: die Art und Menge des Zwischen- oder Endprodukts, die Art und Menge von Störstoffen und Abfallprodukten, die Menge an Ausschuß; ausgewählte Eingangs- und Ausgangsparameter einander zugeordnet werden; die Werte einander zugeordneter Eingangs- und Ausgangsparameter in ein Verhältnis gesetzt werden, um normierte Werte für den Prüfzeitraum abzuleiten; anhand dieser normierten Werte überprüft wird, ob die Eingangs- und Ausgangsparameter zumindest angenähert reale Verarbeitungsverhältnisse widerspiegeln; und ein Warnhinweis erzeugt wird, wenn die normierten Werte vorgegebene Grenzwerte überschreiten. Eind bevorzugte Anwendung der Erfindung ist die Überwachung der Verarbeitung von Kunststoffabfällen.

## Beschreibung

Die Erfindung betrifft ein Verfahren zum Überprüfen der Verarbeitung eines Ausgangsmaterials zu einem Zwischen- oder Endprodukt.

In der kunststoffverarbeitenden Industrie, aber auch in vielen anderen Produktionszweigen, einschließlich der landwirtschaftlichen Produktion, werden Ausgangsstoffe unter Einsatz von Energie, Wasser, menschlicher Arbeitskraft etc. zu einem Zwischen- oder Endprodukt verarbeitet. Die Wirtschaftlichkeit eines solchen Verfahrens läßt sich auf der Grundlage der Art und Menge der Ausgangsmaterialien, der zugeführten Energie der menschlichen Arbeitskraft und dergleichen, der Art, Menge und Qualität des Ausgangsprodukts, der Art und Menge der erzeugten Abfallstoffe und ähnlicher Parameter beurteilen. Empirisch ermittelte oder durch Simulation erhaltene Richtwerte für die obigen Größen könne für einen Vergleich mit den tatsächlichen Produktionsgrößen herangezogen werden. Solche einfachen Vergleiche funktionieren gut, solange die Angaben der Produzenten über die verschiedenen Eingangs- und Ausgangsparameter zuverlässig sind, insbesondere dann, wenn kein Interesse daran besteht, falsche Zahlen zu liefern.

Bei jeder Art von subventionierter Produktion, sei es bei der Aufbereitung und Verwertung von Abfällen, z.B. von Kunststoffabfällen aus dem Dualen System Deutschland (DSD), oder bei der meldepflichtigen Verarbeitung von Shredderleichtfraktion aus der Auto-Schrottverwertung, oder z.B. auch bei der subventionierten landwirtschaftlichen Produktion, besteht jedoch die Gefahr, daß die Produzenten oder Verwerter falsche Angaben über die von ihnen verarbeiteten Mengen der Ausgangsmaterialien und die dementsprechend hergestellten End- oder Zwischenproduke machen.

Zum Beispiel bei DSD-Kunststoffen erhalten die Abnehmer für die Verwertung jeder Tonne Kunststoffabfälle mehrere hundert Mark Subvention. Es besteht die Gefahr und ist in der Vergangenheit geschehen, daß die angeblich von den Abnehmern verwerteten Kunststoffabfälle auf Deponien landen oder ins Ausland verschoben werden, daß zu große Anteile des angeblich verarbeiteten Materials als Ausschuß oder Abfall deklariert werden und dergleichen, um den Subventionsanspruch nicht zu verlieren oder den Gewinn zu maximieren.

Um die Gefahr des Subventionsbetrugs zu reduzieren, wurden in der Vergangenheit entweder Wirtschaftsprüfer zur Kontrolle der Bücher zu dem Subventionsempfänger geschickt, oder z.B. Ingenieure einer unabhängigen technischen Überwachungsorganisation überprüften die vorhandenen technischen Kapazitäten zur Verarbeitung der Abfälle und verglichen diese mit den gemäß den Angaben der Verwerter arbeiteten Abfallmengen. Bei der Verwertung der gebrauchten Kunststoffverpackungen aus dem Dualen System Deutschland hat sich gezeigt, daß die konventionellen Arten der Überprüfung nicht ausreichend sind, um selbst einige größere Betrugsfälle zu verhindern. Ein besonderes Problem der Überprüfungen besteht weiterhin darin, daß der Aufwand und die Dauer der Prüfung in einem vernünftigen Verhältnis zur Menge des verarbeiteten Kunststoffs und dem Risiko eines Betrugs stehen sollte.

Es ist daher eine Aufgabe der vorliegenden Erfindung, ein Verfahren zur Überprüfung von Produktionsvorgängen anzugeben, das innerhalb kurzer Zeit abgeschlossen werden kann und das zuverlässigere Ergebnisse als der Stand der Technik liefert. Diese Aufgabe wird durch ein Verfahren mit den folgenden Merkmalen von Anspruch 1 gelöst.

Es hat sich überaschend gezeigt, daß bei der Anwendung des erfindungsgemäßen Verfahrens mit den Merkmalen von Anspruch 1 innerhalb einer nur eintägigen Prüfung mit sehr hoher Sicherheit festgestellt werden kann, ob eine Verarbeitung gemäß den Angaben des verarbeitenden Betriebs tatsächlich stattgefunden hat oder nicht. Stimmen die Angaben des verarbeitenden Betriebs nicht mit der Realität überein, wird bei Anwendung des erfindungsgemäßen Verfahrens zumindest eine Unplausibilität gefunden, die dann vertieft untersucht werden kann.

Bei dem erfindungsgemäßen Verfahren zur Überprüfung der Verarbeitung eines Ausgangsmaterials zu einem Zwischen- oder Endprodukt werden grundsätzlich wenigstens einer, vorzugsweise jedoch mehrere der folgenden Eingangs- und Ausgangsparameter sowie gegebenenfalls Zwischenparameter für jeweils einen Prüfzeitraum erfaßt: die Art und Menge des verwendeten Ausgangsmaterials, die Art und Menge von verwendeten Zusatzstoffen, die eingesetzte Energie, die Menge des verbrauchten Wassers, der Einsatz menschlicher Arbeitskraft, Lagereingänge und -ausgänge, die Art und Menge des Zwischen- oder Endprodukts, die Art und Menge von Störstoffen und Abfallprodukten, die Menge des Ausschusses und ähnliche Größen. Ausgewählte Eingangs-, Zwischen- und Ausgangsparameter werden einander zugeordnet und in ein Verhältnis gesetzt. Aus diesen Verhältnissen werden normierte Werte gebildet, wie der Strombedarf pro Kilogramm Ausgangsmaterial, die Abfallmenge pro Tonne Ausgangsmaterial, Feuchtigkeitsverluste (in der Regel bei der Lagerung und Verarbeitung abgeschiedenes Wasser) pro Tonne Ausgangsmaterial oder auch Strombedarf pro Tonne Endprodukte etc., und diese normierten Werte werden anhand von empirisch oder durch Simulation ermittelten Richtwerten überprüft, um festzustellen, ob die Eingangs- und Ausgangsparameter zumindest angenähert reale Verarbeitungsverhältnisse widerspiegeln.

Wenn die normierten Werte bestimmte Grenzwerte überschreiten (bzw. bei Mindestgrenzwerten unterschreiten), wird ein Warnhinweis ausgegeben, der anzeigt, daß einzelne Parameter von den Richtwerten stark abweichen. Dieser Warnhinweis kann gemäß einer Variante der Erfindung ein einfaches Alarmsignal sein; bei einer höheren Entwicklungsstufe kann er auch Angaben über Art und Größe des/der abweichenden Parameter(s) enthalten.

Bei einer speziellen Ausführungsform des erfindungsgemäßen Verfahrens werden zunächst die Art und Menge des eingesetzten Ausgangsmaterials und die Art und Menge des erzeugten Zwischen- oder Endprodukts in dem Prüfzeitraum in absoluten Werten erfaßt und ins Verhältnis gesetzt werden, um einen normierten Materialeinsatzwert zu erzeugen, und der normierte Materialeinsatzwert wird mit einem Grenzwert verglichen. Anschließend werden die im Prüfzeitraum eingesetzte Energie, in Form von Strom, Gas, Öl, Benzin, Diesel etc., und die Wassermenge erfaßt und zu den zuerst erfaßten absoluten Werten ins Verhältnis gesetzt, um normierte Energie- und Wasserwerte zu erzeugen, die wiederum mit Richtwerten verglichen werden.

Dadurch schafft man eine Prüfungs-Hierarchie, bei der zunächst das Ausgangsmaterial und das hergestellte Produkt quantitativ und qualitativ in ein Verhältnis und ein normierter Materialwert erzeugt wird. Dann wird die Plausibilität dieses normierten Materialwertes anhand von Richtwerten und der normierten Größen für Energie- und Wasserverbrauch überprüft.

In einer nächsten Prüfstufe können dann z.B. die im Verarbeitungszeitraum eingesetzten Zusatzstoffe sowie angefallene Störstoffe und Abfallprodukte, Ausschuß und dergleichen erfaßt und zu den zuvor ermittelten absoluten Werten ins Verhältnis gesetzt werden, um normierte Störstoff- und Abfallwerte zu erzeugen. Bei dieser hierarchischen Prüfung wird durch Einbeziehung immer weiterer Verarbeitungsparameter in jeder der aufeinanderfolgenden Prüfstufen eine Angabe sowohl über die Wirtschaftlichkeit des Verfahrens als auch darüber erhalten, ob die Angaben zu den verschiedenen Verarbeitungsparametern plausibel sind, d.h. ob sie zumindest annähernd reale Verarbeitungsverhältnisse wiedergeben.

Vorzugsweise werden die Eingangs-, Zwischen- und Ausgangsparameter nicht nur anhand der Angaben der jeweiligen Verwerter und Produzenten bewertet, sondern anhand der dafür aufgewendeten Geldbeträge, Betriebstagebücher, Datenblätter etc. sowie durch eigene Messungen überprüft.

Um das erfindungsgemäße Prüfverfahren automatisiert ablaufen zu lassen, werden Funktionen gebildet, die z.B. abhängig von der Art und Menge des Ausgangsmaterials und der Art des Zwischen- oder Endprodukts Richtwerte für die normierten Werte weiterer Eingangs- und Ausgangsparameter vorgeben, die reale Verarbeitungsverhältnisse widerspiegeln. Diese Richtwerte können empirisch oder anhand von Simulation ermittelt werden. Es können auch Funktionen gebildet werden, die abhängig von einem oder mehreren der Eingangsparamter Richtwerte für die normierten Werte verschiedener Ausgangsparameter und gegebenenfalls für weiterer Eingangsparameter vorgeben.

In einer weiteren Stufe des hierarchischen Prüfverfahrens werden auch die zeitlichen Entwicklungen der Eingangs- und Ausgangsparameter erfaßt und in ein Verhältnis gesetzt. Das heißt, es werden nicht nur die absoluten Werte dieser Parameter für einen Prüfzeitraum geprüft, sondern es wird auch überprüft, ob z.B ein Anstieg des Materialeinsatzes in einem bestimmten begrenzten Zeitraum mit einem entsprechenden Anstieg des Energieeinsatzes und einer erhöhten Produktion einhergeht.

In einer weiteren Hierarchiestufe können die ermittelten normierten Werte mit entsprechenden Werten verglichen werden, die sich in demselben Prüfzeitraum bei anderen Verwertern und Produzenten in ähnlichen Verarbeitungsverfahren ergeben. Grobe Abweichungen könnten ein Hinweis darauf sein, daß die Angaben des einen oder des anderen Produzenten nicht richtig sind.

Das erfindungsgemäße Verfahren hat verschiedene Anwendungsbereich, die allgemein alle Arten von subventionierter Produktion umfassen, bei der erfaßbare Mengen- und Energieströme fließen. Im speziellen ist vorgesehen, das erfindungsgemäße Verfahren für die Überprüfung der Verarbeitung von Kunststoffabfällen einzusetzen, die unter Einsatz von Wasser und Energie zu Kunststoffzwischenprodukten oder - endprodukten aufbereitet und verarbeitet werden. Bei einer anderen Ausführungsform wird das erfindungsgemäße Verfahren für die Prüfung der Verarbeitung von Schredder-Leichtfraktions-Stoffen eingesetzt, die beim Schreddern von Schrottautos und dergleichen entstehen. Shredder-Leichtfraktion wird heute in der Regel zu Koks-Granulat verarbeitet.

Bei dem erfindungsgemäßen Verfahren werden somit ein Teil der oder vorzugsweise alle relevanten mengenstrombezogenen technischen Daten eines Verarbeitungsvorgangs einer Plausibilitätsprüfung unterzogen, die in hierarchischen Prüf- und Plausibilitäts-Überprüfstufen gegliedert ist.

Die Erfindung ist im folgenden anhand eines bevorzugten Ausführungsbeispiels mit Bezug auf die Zeichnung näher erläutert. In den Figuren zeigen:
- Figur 1: eine schematische Darstellung des betrieblichen Ablaufs bei der Aufbereitung und Verarbeitung von Kunststoffabfällen aus dem Dualen System Deutschland (DSD); und
- Figur 2: eine Zusammenstellung der verschiedenen Parameter für ein Verfahren zur Überprüfung einer real durchgeführten Verarbeitung von DSD-Material.

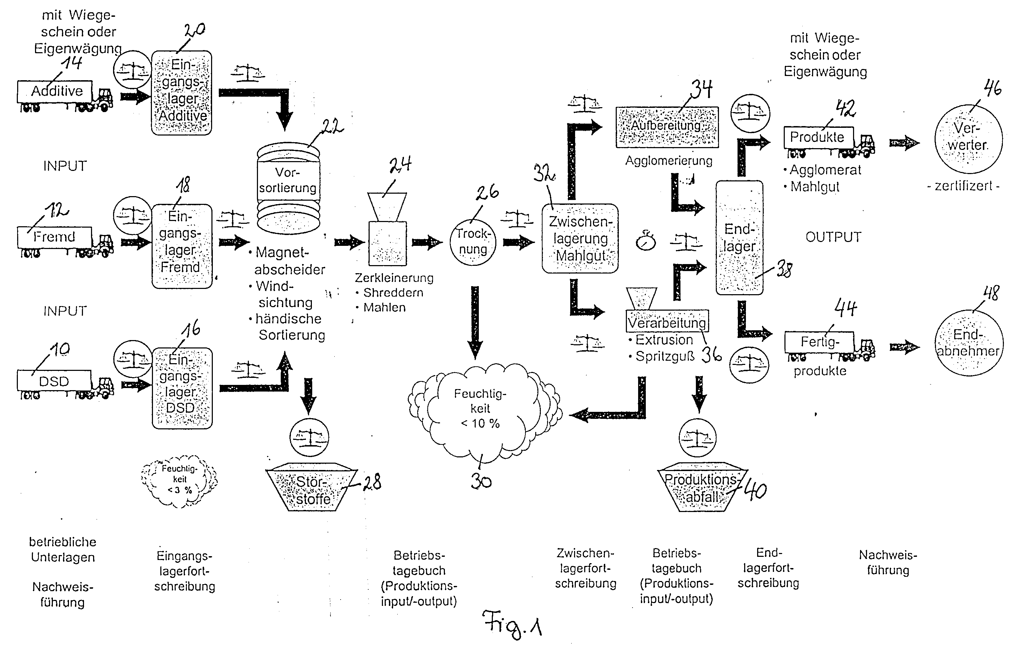

Figur 1 zeigt modellhaft den betrieblichen Ablauf bei der Aufbereitung und Verarbeitung von Kunststoffabfällen. Bei dem gezeigten Ausführungsbeispiel werden als Ausgangsmaterialien DSD-Kunststoffe 10, andere Kunststoffe 12 und Zusatzstoffe 14 eingesetzt. Diese werden in entsprechenden Eingangslagern 16, 18 bzw. 20 zwischengelagert. Die Eingänge und Ausgänge der Zwischenlager 16, 18 und 20 werden erfaßt, z.B. durch Wiegen, und registriert. Gewichtsunterschiede zwischen Eingang und Ausgang könne sich z.B. durch Feuchtigkeitsverluste während der Lagerung ergeben. Die Ausgangsstoffe aus den Eingangslagern 16, 18, 20 werden in einer Vorsortierungseinrichtung 22, wie einem Magnetabscheider, einer Zentrifuge oder einer Handsortieranlage, vorsortiert, nachfolgend in einer Zerkleinerungseinrichtung 24 durch Schreddern oder Mahlen zerkleinert und in einer Trocknungseinrichtung getrocknet. Bei diesen drei Vorverarbeitungsschritten werden Störstoffe 28 aus dem Kunststoffabfallgemisch aussortiert und Feuchtigkeit abgeschieden. Die Menge der Störstoffe 28 kann z.B durch Wiegen ermittelt werden, die Feuchtigkeitsverluste 30 ergeben sich dann durch die Gewichtsdifferenz zwischen dem getrockneten vorverarbeiteten Material und dem aus dem Eingangslagern 26 entnommenen Material unter Berücksichtigung der abgesonderten Störstoffe 28.

Das vorverarbeitete getrocknete Kunststoffmaterial wird als Mahlgut in einem Zwischenlager 32 zwischengelagert. Von dort, dem Zwischenlager 32, wird es einer Aufbereitungsstufe 34 und/oder einer Verarbeitungsstufe 36 zugeführt. Die Aufbereitung kann z.B. eine Agglomerierung des Mahlguts umfassen, bei der Verarbeitung können z.B. durch Extrusion oder Spritzgußverarbeitung Kunststoffprodukte hergestellt werden. Die bei der Aufbereitung und Verarbeitung erzeugten End- oder Zwischenprodukte werden in einem Endlager 38 zwischengelagert, wobei die Mengen der in das Endlager 38 gelieferten Zwischen- und Endprodukte und der diesen entnommen Zwischen-und Endprodukte sowie die Menge des Produktionsabfalls, einschließlich Ausschuß 40, erfaßt werden. Die Zwischen- und Endprodukte 42, 44 werden an weiterverarbeitende Verwerter 46 oder Endabnehmer 48 geliefert.

Für den in Figur 1 gezeigten Ablauf werden in vielen Bereichen, wie der Vorsortierung, Zerkleinerung, Trocknung, Aufbereitung und Verarbeitung sowie für den Transport Energie und Wasser benötigt. In allen Stufen wird menschliche Arbeitskraft eingesetzt.

Eine möglichst vollständige Erfassung aller Material- und Energieströme anhand von betrieblichen Unterlagen, Meßeinrichtungen, wie Stromzählern, Wasserzählern und dergleichen, und den hierfür aufgewendeten Geldbeträgen erlaubt eine Überprüfung der Verarbeitung des DSD-Kunststoff, um zu ermitteln, ob die von den Produzenten angegebenen Mengen DSD-Material tatsächlich sachgemäß verarbeitet wurden.

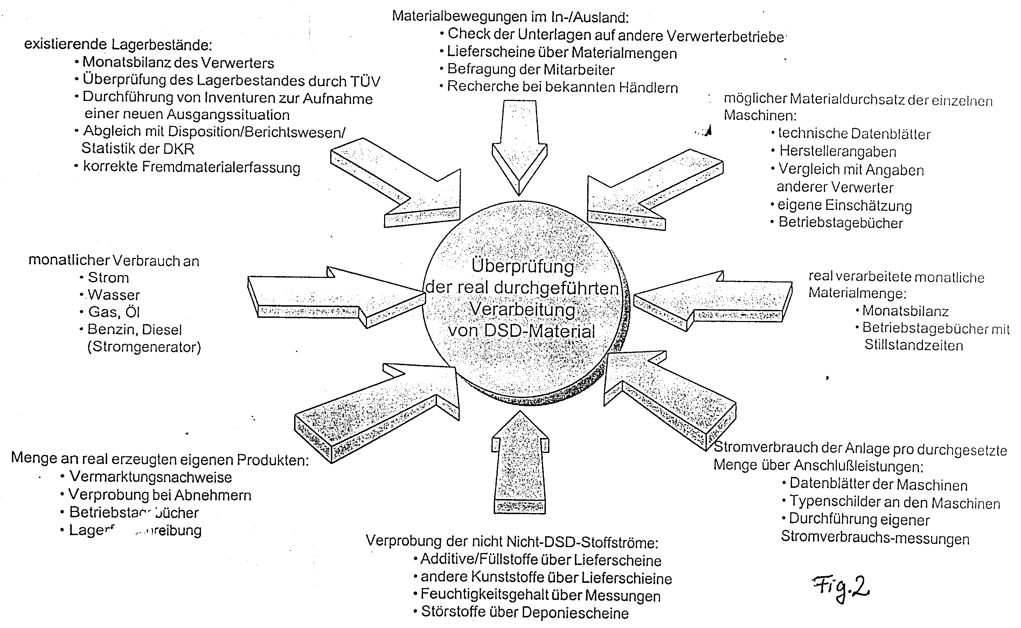

Figur 2 gibt einen Überblick über die verschiedenen Parameter, die bei der erfindungsgemäßen Plausibilitätsprüfung berücksichtigt werden können, sowie von Kriterien, anhand derer die angegebenen Parameter ihrerseits überprüft werden.

Bei dem erfindungsgemäßen Verfahren werden zunächst die Menge des in einem Prüfzeitraum gemäß den Angaben des verarbeitenden Betriebs verarbeiteten DSD-Materials M [kg] erfaßt und in ein Verhältnis zu den im selben Zeitraum hergestellten Produkten P [kg] gesetzt. Hieraus wird ein normierter Materialeinsatzwert M:P gebildet. Wenn M:P größer als ein Richtwert ist, z.B. > 2, kann für die erste Prüfstufe daraus gefolgert werden, daß DSD-Materialien nicht sachgemäß verarbeitet wurden. Die Parameter M und P werden vorzugsweise nicht nur aufgrund der Angaben der verarbeiteten Betriebe, sondern auch durch eigene Messungen oder durch Überprüfung von geeigneten Nachweisen ermittelt.

In einem nächsten Schritte werden der Einsatz von Strom, Gas, Öl, Benzin, Diesel etc. - im folgenden zusammengefaßt als eingesetzte Energie E [W] - und von Wasser W [1] für den Prüfzeitraum erfaßt. Wiederum kann sich die Erfassung auf Angaben der Produzenten, eigene Messungen oder andere Überprüfungen stützen. Die normierten Werte M:E, M:W, P:E und P:W werden berechnet und anhand von geeigneten Richtwerten auf ihre Plausibilität geprüft; d.h. es wird überprüft, ob sie zumindest annähernd reale Verarbeitungsverhältnisse widerspiegeln.

Zusätzlich kann die Menge der abgesonderten Störstoffe S [kg] und des Produktionsabfalls A [kg] einschließlich des Ausschusses erfaßt werden - wieder aufgrund der Angaben der verarbeitenden Betriebe oder durch eigene Messungen oder sonstige Kontrollen - und in ein Verhältnis zu M und P gesetzt werden, um normierte Werte M:S, M:A, P:S, P:A zu bilden. Dabei sind besonders interessant das Verhältnis von Ausgangsmaterial M zu Störstoffen S und das Verhältnis von Produkten P zu Produktionsabfällen und Ausschuß A. Auch diese normierten Werte werden anhand von Richtwerten auf Plausibilität geprüft.

In einer weiteren Prüfstufe werden die ermittelten normierten Werte, wie M:P, M:E, M:W, M:S, P:A etc. mit den Werten anderer verarbeitender Betriebe verglichen, welche DSD-Material aus im wesentlichen demselben Lieferzeitraum verarbeitet haben und vergleichbare Aufbereitungs-und Verarbeitungstechniken einsetzen. Bei einem Vergleich mehrerer Betriebe erhält man insbesondere dann, wenn ein Betrieb gegenüber vielen anderen Betrieben deutliche Abweichungen in seinen normierten Werten aufweist, eine Beurteilungsmöglichkeit der Brauchbarkeit des dort eingesetzten Verfahrens und eine Beurteilungsgrundlage für mögliche Betrugsfälle.

Schließlich können alle der oben beschriebenen Vergleiche nicht nur für die Absolutwerte der Parameter, sondern auch für den zeitlichen Verlauf der Parameter im Prüfzeitraum durchgeführt werden, um zu ermitteln, ob z.B. mit einem Anstieg des verarbeiteten DSD-Materials M auch ein entsprechender Anstieg des Einsatzes an Energie E und Wasser W oder der erzeugten Produktmengen P einhergeht.

Bei der erfindungsgemäßen hierarchischen Plausibilitätsprüfung der Verarbeitungsverfahren erhält man durch den gestaffelten Vergleich der verschiedenen normierten Werte und deren zeitlicher Entwicklungen ein Maß darfür, ob die Angaben der einzelnen verarbeitenden Betriebe realen Verarbeitungsprozessen entsprechen, und wenn ja, wie wirtschaftlich die jeweiligen Verarbeitungsverfahren sind.

Um das erfindungsgemäße Prüfverfahren zu automatisieren, können Funktionen gebildet werden, die z.B. abhängig von der Art und Menge des Ausgangsmaterials M und der Art des Zwischen- oder Endprodukts P Richtwerte für die normierten Werte und Entscheidungskriterien vorgeben, um die Plausibilität und Qualität eines Verarbeitungsverfahrens zu beurteilen. Es können auch Funktionen gebildet werden, die abhängig von einem oder mehreren der Eingangsparamter Richtwerte für die normierten Werte vorgeben. Die Funktionen spiegeln reale Verarbeitungsverhältnisse wieder und können z.B. aus einem Simulationsmodell des Verarbeitungsprozesses abgeleitet werden. Vorzugsweise werden auch Grenzwerte für die jeweiligen normierten Werte angegeben, um bei Überschreiten von Höchstgrenzen oder Unterschreiten von Mindestgrenzen Warnhinweise zu erzeugen.

Bei einer Softwarerealisierung der Erfindung müssen dann lediglich die verschiedenen Parameter in ein geeignetes Auswertungsprogramm eingegeben werden, und das Programm erzeugt eine Bewertung dieser Parameter in dem Sinne, ob die Parameter
a) reale Verarbeitungsverhältnisse widerspiegeln,
b) einen brauchbaren Verarbeitungsprozeß widerspiegeln,
c) einen besonders wirtschaftlichen Verarbeitungsprozeß widerspiegeln,
d) so unstimmig sind, daß die Wahrscheinlichkeit, daß falsche Parameter eingegeben wurden, hoch ist (z.B. > 50 %).

Die speziellen Funktionen und Auswertungsprogramme können von einem Fachmann je nach Anwendungsfall leicht entwickelt werden.

Die erfindungsgemäßen Grundsätze können auch auf andere Gebiete als die Kunststoffabfallverwertung angewendet werden, z.B. auf die Vergasung von Shredder-Leichtfraktion, bei der die Mengenströme meldepflichtig sind, auf die Verarbeitung von der Beobachtung unter-liegenden Abfallstoffen und grundsätzlich auf praktisch alle Verarbeitungsverfahren, bei denen zur Verarbeitung eines Materials oder Erzeugung eines Produkts eine technische Leistung erbracht werden muß, die anhand der hierfür aufgewendeten Energie, Materialien, Geldströme etc. überprüfbar ist, um sicherzustellen, daß die Leistung tatsächlich wie angegeben erbracht wurde.

Die in der vorstehenden Beschreibung, den Ansprüchen und der Zeichnung offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verfahren zur Überprüfung der Verarbeitung eines Ausgangsmaterials zu einem Zwischen- oder Endprodukt, bei dem einer oder mehrere der folgenden Eingangsparameter erfaßt werden: die Art und Menge des verwendeten Ausgangsmaterials, die Art und Menge von eingesetzten Zusatzstoffen, die verbrauchten Energie- und Wassermengen, der Einsatz menschlicher Arbeitskraft;
einer oder mehrere der folgenden Ausgangsparameter erfaßt werden: die Art und Menge des Zwischen- oder Endprodukts, die Art und Menge von Störstoffen und Abfallprodukten, die Menge an Ausschuß;
ausgewählte Eingangs- und Ausgangsparameter einander zugeordnet werden;
die Werte einander zugeordneter Eingangs- und Ausgangsparameter in ein Verhältnis gesetzt werden, um normierte Werte für den Prüfzeitraum abzuleiten;
anhand dieser normierten Werte überprüft wird, ob die Eingangs- und Ausgangsparameter zumindest angenähert reale Verarbeitungsverhältnisse widerspiegeln; und
ein Warnhinweis erzeugt wird, wenn die normierten Werte vorgegebene Grenzwerte überschreiten.

2. Verfahren nach Anspruch 1, dadurch **gekennzeichnet,** daß
(a) die Art und Menge des eingesetzten Ausgangsmaterials (M) und die Art und Menge des erzeugten Zwischen- oder Endprodukts (P) in dem Prüfzeitraum in absoluten Werten erfaßt und ins Verhältnis gesetzt werden, um einen normierten Materialeinsatzwert zu erzeugen, und der normierte Materialeinsatzwert mit einem Grenzwert verglichen wird; und daß
(b) im Prüfzeitraum eingesetzte Energie- und Wassermengen erfaßt und zu den in Schritt (a) erfaßten absoluten Werten ins Verhältnis gesetzt werden, um normierte Energie- und Wasserwerte zu erzeugen.

3. Verfahren nach Anspruch 2, dadurch **gekennzeichnet,** daß im Verarbeitungszeitraum eingesetzte Zusatzstoffe sowie abgesonderte Störstoffe und Abfallprodukte erfaßt und zu in den Schritten (a) und (b) erfaßten absoluten Werten ins Verhältnis gesetzt werden, um normierte Störstoff- und Abfallwerte zu erzeugen.

4. Verfahren nach einem der vorangehenden Ansprüche, dadurch **gekennzeichnet,** daß die Eingangs- und Ausgangsparameter anhand der dafür aufgewendeten Geldbeträge überprüft werden.

5. Verfahren nach einem der vorangehenden Ansprüche, dadurch **gekennzeichnet,** daß die Eingangs- und Ausgangsparameter durch Messungen überprüft werden.

6. Verfahren nach einem der vorangehenden Ansprüche, dadurch **gekennzeichnet,** daß eine Funktion gebildet wird, die abhängig von der Art und der Menge des Ausgangsmaterials und der Art des Zwischen- oder Endprodukts Richtwerte für die normierten Werte vorgibt, die reale Verarbeitungsverhältnisse widerspiegeln.

7. Verfahren nach einem der vorangehenden Ansprüche, dadurch **gekennzeichnet,** daß ein Funktion gebildet wird, die abhängig von einem oder mehreren Eingangsparametern Richtwerte für die normierten Werte vorgibt, die reale Verarbeitungsverhältnisse widerspiegeln.

8. Verfahren nach einem der vorangehenden Ansprüche, dadurch **gekennzeichnet,** daß die zeitlichen Entwicklungen der Eingangs- und Ausgangsparameter im Prüfzeitraum erfaßt und ins Verhältnis gesetzt werden.

9. Verfahren nach einem der vorangehenden Ansprüche, dadurch **gekennzeichnet,** daß die normierten Werte mit entsprechenden normierten Vergleichswerten verglichen werden, die sich bei anderen ähnlichen Verarbeitungsverfahren ergeben.

10. Verfahren nach einem der vorangehenden Ansprüche, dadurch **gekennzeichnet,** daß als Ausgangsmaterial Kunststoffabfälle verwendet werden, die zu Kunststoffprodukten verarbeitet werden.

11. Verfahren nach einem der Ansprüche 1 bis 9, dadurch **gekennzeichnet,** daß als Ausgangsmaterial Schredder-Leichtfraktions-Stoffe verwendet werden, die vergast werden.

12. Verfahren nach einem der Ansprüche 1 bis 9, dadurch **gekennzeichnet,** daß als Ausgangsmaterial Altautos verwendet werden, die in Werkstoffe zur Verwertung und Abfälle zur Beseitigung zerlegt werden.

13. Verfahren nach einem der Ansprüche 1 bis 9, dadurch **gekennzeichnet,** daß als Ausgangsmaterial meldepflichtige Sonderabfälle verwendet werden, die mittels einem energieverzehrenden Verfahren entsorgt bzw. verwertet werden.
